# EUROPÄISCHE PATENTANMELDUNG

(11) **EP 2 549 127 A2**
(43) Veröffentlichungstag der Anmeldung: **23.01.2013**
(21) Anmeldenummer: 12401140.4
(22) Anmeldetag: 05.07.2012
(51) Int. Cl.: F16B 13/12, E04B 1/76, F16B 13/00

(54) **Befestigungselement zur Befestigung einer Dämmstoffplatte**

(30) Priorität: 21.07.2011 DE 102011052039
(71) Anmelder: fischerwerke GmbH & Co. KG, 72178 Waldachtal (DE)
(72) Erfinder: Fischer, Rainer, 72178 Waldachtal (DE); Renz, Jürgen, 72202 Nagold (DE)

(57) **Zusammenfassung**

Die Erfindung betrifft ein Befestigungselement (1) mit einer Dübelhülse (6) und einem Spreiznagel (7) zur Befestigung einer Dämmstoffplatte (3) mit einem über die Dübelhülse (6) überstehenden Halteteller (13) zum Halten der Dämmstoffplatte (3). Durch Einschlagen eines Spreiznagels (7) kann ein Spreizabschnitt (14) der Dübelhülse (6) gespreizt werden, um das Befestigungselement (1) in einem tragenden Untergrund (5) zu verankern. Um zu verhindern, dass ein Nagelschaft (17) bei Einschlagen des Spreiznagels (7) ausknickt, schlägt die Erfindung vor, dass sich der Nagelschaft (17) über mindestens die Hälfte seiner Länge (L₁₇) entgegen der Einbringrichtung (E) konisch erweitert.

## Beschreibung

Die Erfindung betrifft ein Befestigungselement zur Befestigung einer Dämmstoffplatte mit den Merkmalen des Oberbegriffs des Anspruchs 1.

Aus der Offenlegungsschrift DE 195 39 041 A1 ist ein gattungsgemäßes Befestigungselement bekannt. Das Befestigungselement besteht aus einer Dübelhülse und einem zweiteiligen Spreiznagel. Die Dübelhülse weist an ihrem in Einbringrichtung hinteren Ende einen sich im Durchmesser erweiternden kegelstumpfförmigen Halteabschnitt auf, an dem ein Halteteller zum Hintergreifen einer Dämmstoffplatte angeordnet ist. Das vordere Ende der Dübelhülse bildet ein Spreizbereich zum Befestigen des Befestigungselements in einem tragenden Untergrund. Zwischen dem Spreizbereich und dem Halteabschnitt ist ein Hülsenschaft angeordnet, der die beiden Teile miteinander verbindet. Zum Spreizen des Spreizbereichs wird der Spreiznagel in die Dübelhülse eingetrieben. Der in Einbringrichtung vordere Teil des Spreiznagels besteht aus einem metallischen Werkstoff und bildet den Spreizabschnitt zum Spreizen des Spreizbereichs. Der in Einbringrichtung hintere Teil des Spreiznagels besteht aus thermisch isolierendem Kunststoff und bildet den Nagelschaft. Bei dem in der Offenlegungsschrift DE 195 39 041 A1 dargestellten Befestigungselement ist hinter dem Nagelschaft ein zusätzlicher Eintreibabschnitt angeordnet, mit einem an seinem hinteren Ende vergrößerten Durchmesser, auf den Kräfte zum Eintreiben des Spreizabschnitts in den Spreizbereich auf den Nagelschaft aufgebracht werden.

Nachteilig an dem bekannten Befestigungselement ist, dass Spreiznägel, die einen relativ langen Nagelschaft aus thermisch isolierendem Kunststoff aufweisen, beim Einschlagen in die Dübelhülse relativ leicht ausknicken, so dass der Spreizabschnitt des Spreiznagels nicht in den Spreizbereich der Dübelhülse eingetrieben werden kann.

Aufgabe der Erfindung ist daher, ein Befestigungselement zu schaffen, bei dem auch relativ lange Spreiznägel prozesssicher in die Dübelhülse schlagend eingetrieben werden können.

Diese Aufgabe wird erfindungsgemäß durch ein Befestigungselement mit den Merkmalen des Anspruchs 1 gelöst. Das erfindungsgemäße Befestigungselement zur Befestigung einer Dämmstoffplatte weist eine Dübelhülse und einen Spreiznagel auf. An der Dübelhülse ist in Einbringrichtung hinten ein radial zur Längsachse des Befestigungselements über die Dübelhülse überstehender Halteteller zum Halten der Dämmstoffplatte angeordnet. In Einbringrichtung vorn weist die Dübelhülse einen Spreizbereich auf, mit der das Befestigungselement in einem Bohrloch in einem tragenden Untergrund, beispielsweise in Beton oder Mauerwerk, befestigt werden kann. Mit "Einbringrichtung" ist die Richtung gemeint, in die das Befestigungselement in das Bohrloch eingebracht wird. In Einbringrichtung beziehungsweise parallel zur Einbringrichtung verläuft auch die Längsachse des Befestigungselements. Der Spreizbereich der Dübelhülse kann mittels eines Spreizabschnitts des Spreiznagels aufgespreizt werden, der beispielsweise aus einem harten Material wie Stahl besteht. Zudem weist der Spreiznagel einen Nagelschaft auf, der im Wesentlichen aus thermisch isolierendem Kunststoff besteht und sich an den Spreizabschnitt anschließt. Über den Nagelschaft werden Schläge, die beispielsweise beim Eintreiben mittels eines Hammers auf den Spreiznagel aufgebracht werden, auf den Spreizabschnitt übertragen. Um ein Ausknicken des Nagelschafts zu verhindern, erweitert sich der Nagelschaft erfindungsgemäß über mindestens die Hälfte seiner Länge entgegen der Einbringrichtung konisch. Das bedeutet, dass der Durchmesser des Nagelschafts an seinem vorderen Ende kleiner ist als an seinem hinteren Ende. Mit "konisch" ist gemeint, dass ein gedachter Rotationskörper, der den konischen Bereich des Nagelschafts umschreibt, kegelstumpfförmig ist, mit einem sich entgegen der Einbringrichtung erweiternden Querschnitt. Der Querschnitt ist insbesondere kreisförmig, wobei er aber auch davon abweichen und beispielsweise polygonal sein kann. Insbesondere liegt der Rotationskörper im Wesentlichen flächig am konischen Bereich des Nagelschafts an, was bedeutet, dass sich der Querschnitt des Nagelschafts entlang seiner Längsachse im Wesentlichen stetig und entgegen der Einbringrichtung vergrößert. Dieser Teil des Nagelschafts ist insbesondere kegelstumpfförmig. Auf Grund der konischen Ausbildung ist der Nagelschaft relativ stabil, ohne dass der gesamte Querschnitt des Nagelschafts vergrößert werden muss, so wie es bei einer zylindrischen Ausbildung des Nagelschafts notwendig wäre. Ein Ausknicken des Nagelschafts beim Einschlagen wird durch diese Ausgestaltung des Nagelschafts weitestgehend verhindert und zudem ist eine Material sparende und somit kostengünstige Herstellung des Befestigungselements möglich. Vorzugsweise erweitert sich der Nagelschaft mindestens über seine vordere Hälfte, wodurch der Nagelschaft stabil ausgeführt werden kann. Insbesondere erweitert sich der Nagelschaft im Wesentlichen über seine gesamte Länge, wodurch ein Optimum hinsichtlich Materialeinsatz und Stabilität des Nagelschafts erreicht wird. Beispielsweise erweitert sich ein Nagelschaft von einem Durchmesser von 5 mm an seinem vorderen Ende auf einen Durchmesser von 7 mm an seinem hinteren Ende. Die Länge des Nagelschafts ist abhängig von der Dämmstoffdicke. Sie beträgt beispielsweise 100 mm.

Weiterhin ist bevorzugt, dass der Spreizabschnitt mit dem Nagelschaft einstückig ist und dass der Nagelschaft im Wesentlichen aus verstärktem Kunststoff besteht. Insbesondere ist der Spreizabschnitt aus Metall gefertigt und mit einem Verbindungsstück des Nagelschafts biegefest verbunden, das mit dem verstärktem Kunststoff des Nagelschafts umspritzt ist. Die Verbindung zwischen dem Spreizabschnitt und dem Nagelschaft ist insbesondere einstückig ausgeführt. Wird der Spreiznagel in die Dübelhülse eingetrieben, so dringt der Spreizabschnitt in den Spreizbereich ein und spreizt den Spreizbereich in radialer Richtung. Dabei wird der Spreizabschnitt im Spreizbericht fest umschlossen und gegen eine Verdrehung um eine radial verlaufende Achse eingespannt gehalten, wodurch die statische Knicklänge des Nagelschafts reduziert ist. Beim weiteren Eintreiben des Spreiznagels, für das im Regelfall stärker auf den Spreiznagel geschlagen werden muss, wird durch die Einspannung und die Verwendung von festem faserverstärktem Kunststoff für den Nagelschaft ein Knicken des Spreiznagels wirksam verhindert.

Bei einer bevorzugten Ausgestaltungsform des erfindungsgemäßen Befestigungselements ist hinter dem Nagelschaft ein Eintreibabschnitt angeordnet, mit einer Länge, die insbesondere kleiner oder gleich der Länge des Spreizabschnitts ist. Die Länge des Eintreibabschnitts entspricht im Wesentlichen dem Verschiebeweg des Spreiznagels in der Dübelhülse, insbesondere der Länge, um die der Spreiznagel in den Spreizabschnitt der Dübelhülse eindringt. In einem unverspreizten Montagezustand, in dem der Spreiznagel nur teilweise in die Dübelhülse eingeführt ist, steht der Spreiznagel mit dem Eintreibabschnitt über das hintere Ende der Spreizhülse über. Der Eintreibabschnitt kann im Wesentlichen zylindrisch, mit einem Bund am hinteren Ende ausgeführt sein. "Im Wesentlichen zylindrisch" bedeutet in diesem Zusammenhang, dass ein gedachter, den Eintreibabschnitt umschreibender Körper zylinderförmig ist. Am Übergang von Eintreibabschnitt und Nagelschaft kann eine Einschlagsperre angeordnet sein, die den Spreiznagel im Montagezustand in einer vordefinierten Position in der Dübelhülse hält. Die Einschlagsperre besteht beispielsweise aus einer in Umfangsrichtung verlaufenden Nut und einer zu dieser Nut korrespondierenden Feder, die in die Nut eingreift. Der Eintreibabschnitt weist beispielsweise einen größeren Durchmesser wie der Spreizabschnitt auf. Beispielsweise entspricht der Durchmesser des Eintreibabschnitts dem Durchmesser des hinteren Endes des Nagelschafts, wohingegen das vordere Ende des Nagelschafts einen Durchmesser aufweist, der im Wesentlichen dem Durchmesser des Spreizabschnitts entspricht.

Weiterhin ist bevorzugt, dass die Dübelhülse in Einbringrichtung hinter dem Spreizbereich einen Hülsenschaft aufweist, der sich zumindest über einen vorderen Teil, insbesondere im Wesentlichen über seine gesamte Länge, konisch erweitert. Hierdurch wird gewährleistet, dass die Dübelhülse den Spreiznagel trotz des sich erweiternden Nagelschafts aufnehmen kann. Durch die konische Ausgestaltung des Hülsenschafts kann die Dübelhülse trotz des sich erweiternden Durchmessers problemlos in ein den Dämmstoff durchdringendes Bohrloch eingebracht werden.

Vorzugsweise ist die Wandstärke des Hülsenschafts über seine Länge im Wesentlichen konstant. Da der Hülsenschaft durch seine konische Ausgestaltung stabil gegen Ausknicken ist, ist ein zusätzlicher Materialeinsatz zur Stabilisierung des Hülsenschafts durch eine Vergrößerung der Wandstärke nicht notwendig. Die Wandstärke kann über den gesamten Hülsenschaft im Wesentlichen unverändert bleiben, so dass die Dübelhülse mit geringem Materialaufwand kostengünstig hergestellt werden kann.

Bei einer weiteren bevorzugten Ausgestaltungsform korrespondiert die Innenkontur der Dübelhülse mit der Außenkontur des Spreiznagels. Im verspreizten Befestigungszustand liegt der eingetriebene Spreiznagel im Wesentlichen vollflächig an der Dübelhülse an. Der Spreiznagel stabilisiert die Dübelhülse in Querrichtung.

Die Erfindung wird nachfolgend anhand eines Ausführungsbeispiels näher erläutert, das in den Figuren dargestellt ist.

Es zeigen:
- Figur 1: ein erfindungsgemäßes Befestigungselement im unverspreizten Montagezustand in einer Schnittdarstellung;
- Figur 2: die Dübelhülse eines erfindungsgemäßen Befestigungselements in einer perspektivischen Ansicht; und
- Figur 3: der Spreiznagel des erfindungsgemäßen Befestigungselements in einer perspektivischen Ansicht.

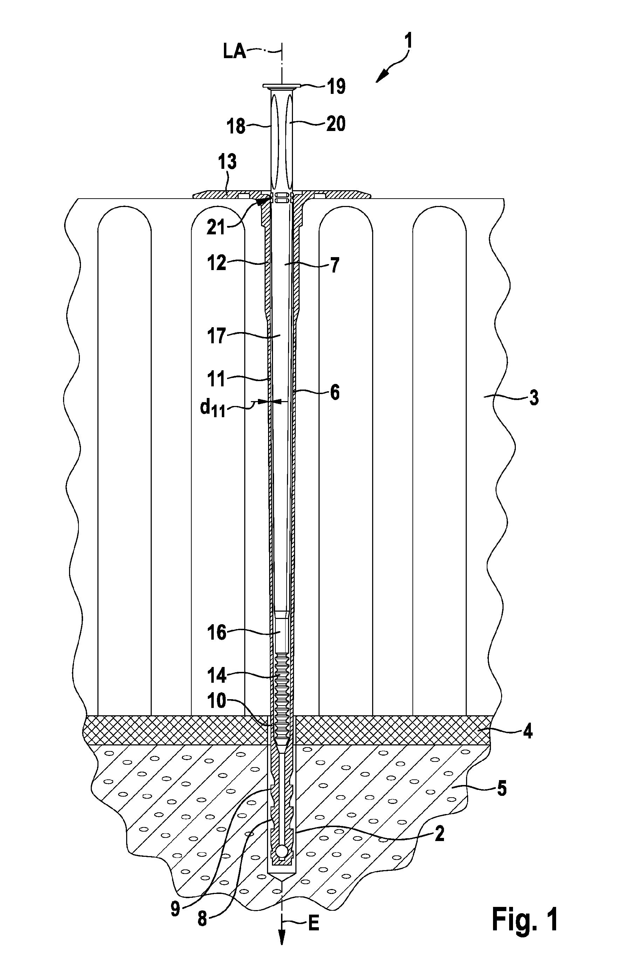

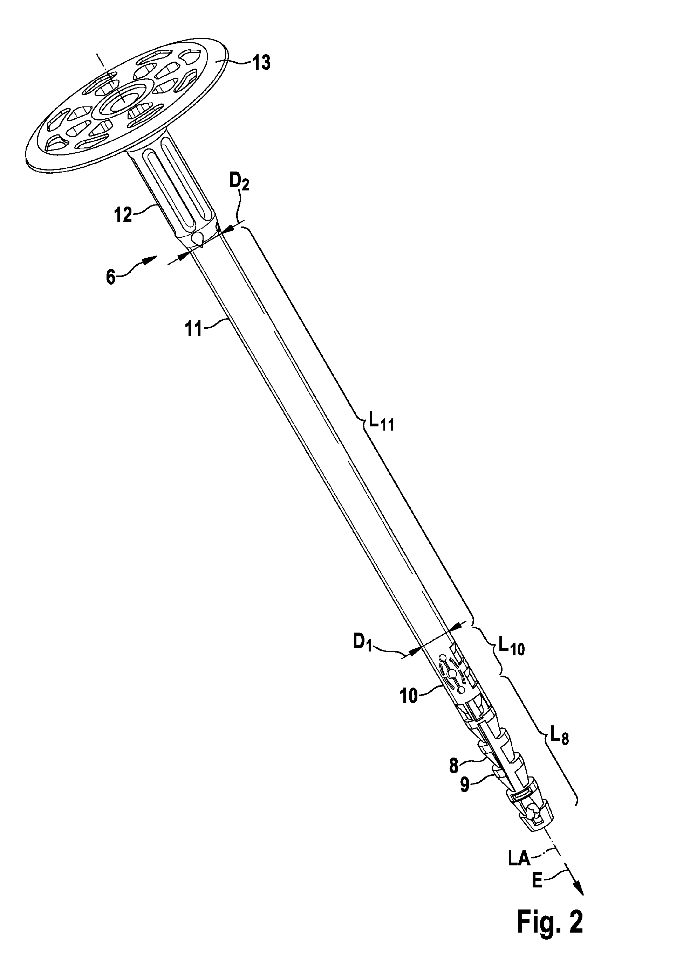

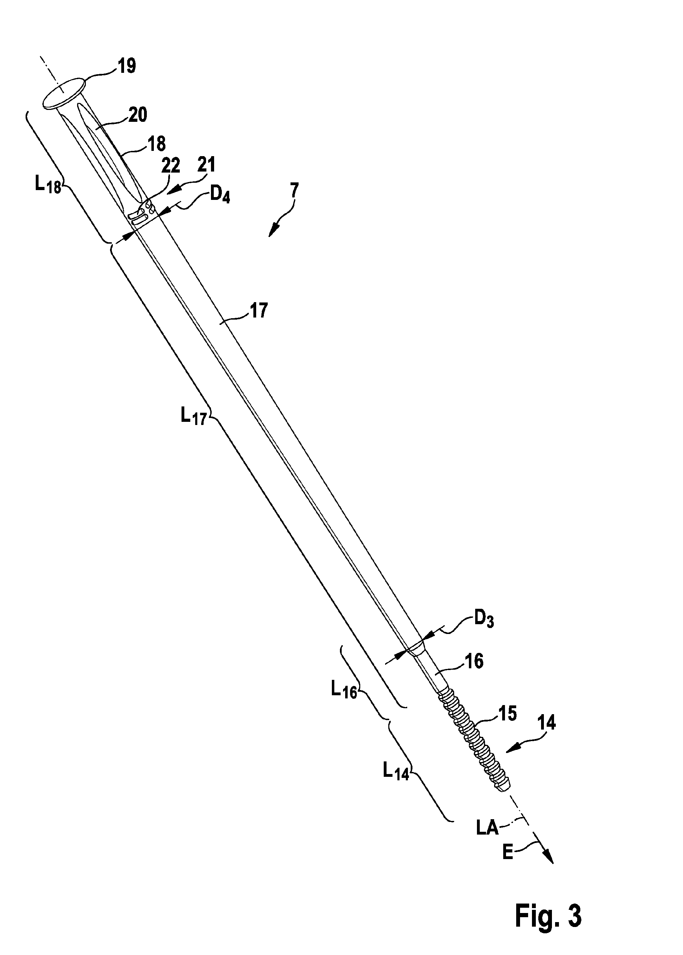

In Figur 1 ist ein erfindungsgemäßes Befestigungselement 1 in einem unverspreizten Montagezustand dargestellt. Das Befestigungselement 1 sitzt in einem Bohrloch 2, das durch eine Dämmstoffplatte 3 und eine Kleberschicht 4 hindurch in einen tragenden Untergrund 5, eine Wand aus Beton, eingebracht wurde. Das Befestigungselement 1 umfasst eine Dübelhülse 6 und einen Spreiznagel 7, die in den Figuren 2 und 3 gesondert dargestellt sind.

Die Dübelhülse 6 weist an ihrem in Einbringrichtung E vorderen Ende einen Spreizbereich 8 mit einer Länge L₈ auf, an dem rippenartige Vorsprünge 9 zum besseren Halt im Untergrund 5 ausgeformt sind. An den Spreizbereich 8 schließt sich entgegen der Einbringrichtung E eine Stauchzone 10 mit der Länge L₁₀ an, wie sie aus der Offenlegungsschrift DE 10 2007 043 031 A1 bekannt ist. Der Spreizbereich 8 und die Stauchzone 10 sind im Wesentlichen zylindrisch, das bedeutet, dass ein gedachter, den Spreizbereich 8 und die Stauchzone 10 umschreibender, zur Längsachse LA rotationssymmetrischer Körper, die Form eines Zylinders mit einem Außendurchmesser von ungefähr 8 mm aufweist, was dem Nenndurchmesser des Bohrlochs 2 entspricht. An die Stauchzone 10 schließt sich entgegen der Einbringrichtung E ein konischer Hülsenschaft 11 mit einer Länge L₁₁ an, die ungefähr 135 mm beträgt. "Konisch" bedeutet, dass ein gedachter, den Hülsenschaft 11 umschreibender und zur Längsachse LA rotationssymmetrischer Körper die Form eines sich entgegen der Einbringrichtung E im Durchmesser erweiternden Kegelstumpfs aufweist. Der Hülsenschaft 11 weist an seinem vorderen Ende einen Außendurchmesser D₁ von ungefähr 8 mm auf, während der Durchmesser D₂ an seinem hinteren Ende ungefähr 10 mm beträgt. Im Bereich des Hülsenschafts 11 ist die Wandstärke d₁₁ der Dübelhülse 6 im Wesentlichen konstant. An den Hülsenschaft 11 schließt sich ein im Durchmesser erweiterter zylindrischer Haltebereich 12 an, an dessen hinterem Ende ein in radialer Richtung über die Dübelhülse 6 überstehender Halteteller 13 zum Halten der Dämmstoffplatte 3 angeordnet ist. Der Halteteller 13 ist einstückig mit der Dübelhülse 6 hergestellt.

Der Spreiznagel 7 weist an seinem vorderen Ende einen Spreizabschnitt 14 mit einer Länge L₁₄ auf. Der Spreizabschnitt 14 weist einen im Wesentlichen zylindrischen Grundkörper auf, an dem umlaufende Spreizkonen 15 angeordnet sind. Der Spreizabschnitt 14 ist mit dem sich anschließenden Verbindungsstück 16, mit einer Länge L₁₆, einstückig aus Metall ausgeführt. Das Verbindungsstück 16 ist Teil des Nagelschafts 17, der sich an den Spreizabschnitt (14) entgegen der Einbringrichtung E anschließt. Der Nagelschaft 17 ist im Wesentlichen aus Kunststoff ausgeführt, wobei der Kunststoff das Verbindungsstück 16 an seinem hinteren Ende umschließt so dass der aus Kunststoff bestehende Teil des Nagelschafts 17 fest mit dem Verbindungsstück 16 verbunden ist. Über das Verbindungsstück 16 ist der Nagelschaft 17 mit dem Spreizabschnitt 14 einstückig und biegesteif durch Umspritzen verbunden. Der Nagelschaft 17 ist aus glasfaserverstärktem Kunststoff hergestellt und somit fest und stabil. Um die Stabilität des Nagelschafts 17 zu vergrößern und insbesondere den Widerstand des Nagelschafts 17 gegen ein Ausknicken beim Einschlagen des Spreiznagels 7 in die Dübelhülse 6 zu erhöhen, ist der Nagelschaft 17 im Wesentlichen über seine gesamte Länge L₁₇ konisch als Kegelstumpf ausgeführt. Der Nagelschaft 17 erweitert sich entgegen der Eintreibrichtung E fast über seine gesamte Länge L₁₇ von einem Durchmesser D₃ an seinem vorderen Ende von ungefähr 5 mm auf einen Durchmesser D₄ an seinem hinteren Ende von ungefähr 7,5 mm, wobei die Länge L₁₇ ebenfalls ungefähr 135 mm beträgt. Nur der vorderste Teil des Nagelschafts 17, der vordere Teil des Verbindungsstücks 16, das nicht mit Kunststoff umspritzt ist, weist eine zylindrische Grundform auf. Der aus Kunststoff bestehende Teil des Nagelschafts 17 ist über seine gesamte Länge konisch als Kegelstumpf ausgeführt. Obwohl der konische Nagelschaft 17 stabil gegen Ausknicken ist, ist er trotzdem kostengünstig herstellbar, da aufgrund seiner konischen Ausbildung nur geringfügig mehr Material verwendet werden muss, als bei einem zylindrischen Nagelschaft mit einem konstanten Durchmesser D₃, wie er als Stand der Technik bekannt ist. Entgegen der Einbringrichtung E schließt sich an den Nagelschaft 17 ein Eintreibabschnitt 18 mit der Länge L₁₈ an. Die Länge L₁₈ des Eintreibabschnitts 18 ist in der Montagestellung ungefähr gleich der Länge L₁₄ des Spreizabschnitts 14 und entspricht der Strecke, die der Spreiznagel 7 beim Einschlagen in die Dübelhülse 6 eingetrieben wird. Der Eintreibabschnitt 18 weist eine zylindrische Grundform auf, sowie einen umlaufenden Bund 19 an seinem hinteren Ende. In die zylindrische Grundform sind vier sich in Längsrichtung erstreckende kreissegmentförmige Nuten 20 angeordnet, durch die Material bei der Herstellung des Spreiznagels 7 eingespart werden kann, aufgrund deren Ausgestaltung der Eintreibabschnitt 18 aber nicht an Stabilität einbüßt.

Zwischen dem Nagelschaft 17 und dem Eintreibabschnitt 18 ist eine Einschlagsperre 21 angeordnet, mit radial überstehenden und in Umfangsrichtung verlaufenden Stegen 22, die den Spreiznagel 7 im Montagezustand in der Dübelhülse 6 verspannen und in der in Figur 1 dargestellten gewünschten Position halten.

Die Dübelhülse 6 und der Spreiznagel 7 sind derart gestaltet, dass die Innenkontur der Dübelhülse 6 mit der Außenkontur des Spreiznagels 7 korrespondiert. Wird der Spreiznagel 7 durch Schläge in die Dübelhülse 6 eingetrieben, so dringt der Spreizabschnitt 14 in den Spreizbereich 8 ein und verdrängt diesen radial nach außen, wodurch die Dübelhülse 6 im Bohrloch 2 aufgespreizt und befestigt wird. Der Spreizabschnitt 14 wird dabei vom Spreizbereich 8 fest umschlossen und eingespannt. Beim Einschlagen des Spreiznagels 7 besteht aufgrund der stabilen konischen Form des Nagelschafts 17 keine Gefahr, dass der Nagelschaft 17 knickt und bricht. Nach dem Eindringen des Spreizabschnitts 14 in den Spreizbereich 8 wird der Spreiznagel 7 zudem von der Dübelhülse 6 eingespannt gehalten, wodurch die statische Knicklänge des Spreiznagels 7 reduziert wird.

Mit dem erfindungsgemäßen Befestigungselement 1 ist es somit möglich, auch einen Spreiznagel 7 mit einem relativ langen Nagelschaft 17 in die Dübelhülse 6 einzuschlagen, ohne dass der aus Kunststoff hergestellte Nagelschaft 17 ausknickt und bricht. Trotzdem ist das erfindungsgemäße Befestigungselement 1 kostengünstig herstellbar.

### Bezugszeichenliste

### Befestigungselement zur Befestigung einer Dämmstoffplatte

- 1: Befestigungselement
- 2: Bohrloch
- 3: Dämmstoffplatte
- 4: Kleberschicht
- 5: tragender Untergrund
- 6: Dübelhülse
- 7: Spreiznagel
- 8: Spreizbereich
- 9: rippenartiger Vorsprung
- 10: Stauchzone
- 11: Hülsenschaft
- 12: Haltebereich
- 13: Halteteller
- 14: Spreizabschnitt
- 15: Spreizkonus
- 16: Verbindungsstück
- 17: Nagelschaft
- 18: Eintreibabschnitt
- 19: Bund
- 20: Nut
- 21: Einschlagsperre
- 22: Steg
- E: Einbringrichtung
- LA: Längsachse
- L₈: Länge des Spreizbereichs 8
- L₁₀: Länge der Stauchzone 10
- L₁₁: Länge des Hülsenschafts 11
- L₁₄: Länge des Spreizabschnitts 14
- L₁₆: Länge des Verbindungsstücks 16
- L₁₇: Länge des Nagelschafts 17
- L₁₈: Länge des Eintreibabschnitts 18
- D₁: Durchmesser des Hülsenschafts 11 an seinem vorderen Ende
- D₂: Durchmesser des Hülsenschafts 11 an seinem hinteren Ende
- D₃: Durchmesser des Nagelschafts 17 an seinem vorderen Ende
- D₄: Durchmesser des Nagelschafts 17 an seinem hinteren Ende
- d₁₁: Wandstärke des Hülsenschafts 11

## Patentansprüche

1. Befestigungselement (1) mit einer Dübelhülse (6) und einem Spreiznagel (7) zur Befestigung einer Dämmstoffplatte (3),
- wobei in Einbringrichtung (E) hinten an der Dübelhülse (6) ein in radialer Richtung über die Dübelhülse (6) überstehender Halteteller (13) zum Halten der Dämmstoffplatte (3) angeordnet ist,
- wobei die Dübelhülse (6) in Einbringrichtung (E) vorn einen Spreizbereich (8) zur Befestigung des Befestigungselements (1) in einem tragenden Untergrund (5) aufweist, der mittels eines Spreizabschnitts (14) des Spreiznagels (7) aufgespreizt werden kann, und
- wobei der Spreiznagel (7) einen Nagelschaft (17) aufweist, der sich an den Spreizabschnitt (14) anschließt,
**dadurch gekennzeichnet,**
**dass** sich der Nagelschaft (17) über mindestens die Hälfte seiner Länge (L₁₇) entgegen der Einbringrichtung (E) konisch erweitert.

2. Befestigungselement nach Anspruch 1, **dadurch gekennzeichnet, dass** der Nagelschaft (17) sich mindestens über seine vordere Hälfte, insbesondere im Wesentlichen über seine gesamte Länge (L₁₇), konisch erweitert.

3. Befestigungselement nach Anspruch 1 oder 2, **dadurch gekennzeichnet, dass** der Spreizabschnitt (14) mit dem Nagelschaft (17) einstückig ist und dass der Nagelschaft (17) im Wesentlichen aus verstärktem Kunststoff ist.

4. Befestigungselement nach einem der Ansprüche 1 bis 3, **dadurch gekennzeichnet, dass** hinter dem Nagelschaft (17) ein Eintreibabschnitt (18) angeordnet ist.

5. Befestigungselement nach einem der Ansprüche 1 bis 4, **dadurch gekennzeichnet, dass** die Dübelhülse (6) in Einbringrichtung (E) hinter dem Spreizbereich (8) einen Hülsenschaft (11) aufweist, der sich zumindest über einen vorderen Teil, insbesondere im Wesentlichen über seine gesamte Länge (L₁₁), konisch erweitert.

6. Befestigungselement nach Anspruch 5, **dadurch gekennzeichnet, dass** die Wandstärke (d₁₁) des Hülsenschafts (11) über seine Länge (L₁₁) im Wesentlichen konstant ist.

7. Befestigungselement nach einem der Ansprüche 1 bis 6, **dadurch gekennzeichnet, dass** die Innenkontur der Dübelhülse (6) mit der Außenkontur des Spreiznagels (7) korrespondiert.
